# EUROPEAN PATENT APPLICATION

(11) **EP 3 041 254 A1**
(43) Date of publication of application: **06.07.2016**
(21) Application number: 14382581.8
(22) Date of filing: 30.12.2014
(51) Int. Cl.: H04Q 3/00, H04L 12/24, H04W 24/02

(54) **Method for providing information on network status from telecommunication networks**

(71) Applicant: Telefonica Digital España, S.L.U., 28013 Madrid (ES)
(72) Inventor: Grunenberger, Yan, 28013 Madrid (ES); Leontiadis, Ilias, 28013 MADRID (ES); Neystadt, John, 28013 MADRID (ES)
(74) Representative: Carpintero Lopez, Francisco

(57) **Abstract**

A method for providing network status information comprising:
- splitting the service provider's network into multiple overlay levels, from a lowest overlay level 0 to a highest overlay level n;
- at the lowest overlay level 0, collecting network status information from network elements of the service provider's network and communication devices connected to the network elements of the service provider's network;
- for each overlay level i, from a lower overlay level i=1 to a higher overlay level i=n-1, collecting network status information from the network elements connected at the overlay level i and filtering the network status information collected at previous overlay levels j, j= 0, 1,...i-1, to generate events and aggregate them based on an identity and a value of each event;
- broadcasting the aggregated events in cascade, from overlay 1 to overlay n-1;
- exposing through publish-subscribe the broadcasted information to the consumer at the highest overlay level n.

## Description

### Field of the invention

The present invention has its application within the telecommunication sector, especially, deals with the field of quality improvement for call connection and routing in communication networks: fixed networks (e.g., Public Switched Telephone Network -PSTN-), mobile (2G, 3G and beyond 3G) networks and Internet Protocol (IP) Multimedia Subsystems (IMS) included.

More specifically, the present invention proposes a method for providing network status information to bring network awareness to communication/interactive/multimedia applications running on top of a current telecommunication network, so that a third party delivering a communication service can benefit from this awareness by improving the quality of the communication (voice/video) and benefits from new features such as call routing (e.g. PSTN call vs. Voice over IP call) divert or any services that can benefit from the added value of the provided network status information.

### Background of the invention

A large number of existing solutions are already addressing the problem of providing quality metrics inside classical, PSTN-based phone, networks as well as Voice over IP (VoIP) networks; for example: US7830860 and EP1453244 respectively. These quality metrics can then be used for example to alter the call routing between a normal PSTN and VoIP line, as disclosed in US6870827.

Anther example is described in CA2691939, which is related to call quality extraction for monitoring quality experience on a per subscriber and per session basis. For this monitoring, the flow between network endpoints is analyzed to generate a report on quality in an intermediate point of the network flow. This solution is applied to VoIP RTP/RTCP protocols.

In US7372844, a prediction value of a voice quality parameter (MOS: Mean Opinion Score), provides a numerical measure of the quality of human speech at the destination end of the circuit, in order to alter the routing of the VoIP call. This method requires decoding the voice packet and analysing the flow of the voice itself.

In the traditional approach of call quality estimation and call routing, the necessary requirement is that the underlying network should be able to 1) identify the call inside the network flows and 2) to decode the flow to extract the multimedia flow (mostly like voice) in order to do processing on top of it. This paradigm is not any more sustainable in the current state of the technology. Indeed, third (3^{rd}) parties, such as VoIP provider might be using proprietary protocols as well as encryption to protect the secrecy of their users. A typical example of such provider is Skype: its technologies are (or at least, was using) advanced networking techniques such as P2P to cross the infrastructure of the network provider and was using encryption as a standard practice for all the flows. In that context, any approach based on accessibility/knowledge of the content cannot be used anymore. This means that the only way for a 3^{rd} party to assess the quality and improve the service is to perform itself the necessary measurements. Furthermore, the recent developments in mobile operating systems are limiting the accessibility of contextual information to application developers. This means that an application such as Skype is restricted to a certain level of information and therefore cannot get benefit from it for call routing if a new, better, connectivity option is available during call.

Network providers are usually monitoring the operations of their own network using (commonly known as) network probes. Companies usually provide those network probe devices to providers in order to help them monitor, maintain and expand their network. Manufacturers such as JDSU, National Instruments often rely on specialized protocol knowledge to extract raw information - such as signaling data in cellular networks. While this information can be used to debug network problems, it could be also used for improving call routing information and call quality inference (for example, if a network is capped to a certain bandwidth it would be wise to use an adapted codec for voice). However, such diagnostic information is hard to convey and hard to scale in a generic way across an entire network provider - the sampled information might be actually larger than the relevant information for call quality/call routing purpose and there is no common Application Programming Interface (API) that would allow this process-.

Summarizing the existing problem, from an over-the-top (OTT) content provider point of view, the Internet Service Provider (ISP) networks are opaque and do not offer any information such as type of network, bandwidth, connection stability. Therefore, there is a need in the state of the art for both parties (the network operator providing OTT- service packages and the third party service provider) to collaborate in order to offer call quality and call routing capabilities by reusing the existing present status information in the network without relying on specific network probes.

### Summary of the invention

The present invention solves the aforementioned problem and overcomes previously explained state-of-art work limitations by providing information exposed indirectly by different vantage points available from a telecommunication network operator perspective.

In the context of the present invention, it is assumed that an Internet Service Provider (ISP) may be operating simultaneously a fixed (copper/fiber) network, a mobile network (encompassing 2G, 3G and 4G) network, as well as internet-facing services such as Internet Exchange Points where they are interconnected to others providers.

This invention relies on many existing sources of information present in the networks of mobile and fixed ISPs. Many of the information sources have different time scale and different way to be extracted. Furthermore, the present invention provides a scalable methodology for collecting, filtering and broadcast information even if all the network sources are broadcasting events.

The present invention provides information on the status of a network by performing the following main steps:
1) Collect and process network status data from communication devices connected to the network and from network elements belonging to said network.
2) Filter and aggregate relevant processed network status data, where relevant events are broadcasted in cascade from the lower to the higher levels of the network infrastructure.
3) Exposing the aggregated network status data to the consumer of the network status data.

In a preferred enbodiment of the invention, these three steps are performed as follows:
1) Each VoIP client that needs to be provided with call quality metrics and call routing information, in turn, provides a series of identifiers to the host network in order to allow the ISP network to track a specific client. Typically, this information can be delivered as a tuple composed by the internal and external IP address and the UDP/TCP port used by the VoIP client. It insures that only a known, in-use, service can access events of the user. This is an authentication step: Domain-based authentication, AS-based and eventually IP-based if necessary can be used.
2) Once the flow is tracked at the higher level of the network (for example, the Public Data Network -PDN- gateway for the mobile network; or the Core network routing for the fixed network), each information source is receiving a subscribe notification for any relevant event for the particular identifier provided by the client. The subscription may be initiated either by the user device (e.g., when initiating a call) or by the service provider (server side). Then, it is propagated to the whole network. For example, in the mobile network, a particular flow with a public IP address and particular port is getting "resolved" into the next identifier. In the case of the mobile network, the public address/port is resolved in the mobile identifier (IMSI) based on the Carrier Grade NAT information (CGNAT); this information is then resolved into a particular local identifier at the Radio Network Controller (RNC) level; and then at a particular base station (NodeB) level. This is a resolution/subscribe step.
3) Once the subscription is done at each level of the network, each source is broadcasting the information and, in addition, this information is getting filtered. This is a percolation step, where redundant events are filtered. All information that is not relevant to the monitored flow (e.g., about other flows or data paths) is discarded. For discarding, any variation in a value of a status information parameter (e.g." a SNR value) is used in a discrete way. If the value is changing from X percent, an event is generated. Some mechanisms like Schmidt trigger can be used to refine the stability of the events notification, but some big data kind of filtering (using history of value) can be also applicable. Additionally, the events are selected, for example, in terms of frequency (e.g., during a call, it might be interesting to receive more events notification on connection quality, and less during the idle period).

According to an aspect of the present invention, a method for providing a user (which is a consumer of network status information) with network status data/information of a service provider's network, comprising the following steps:
- splitting the service provider's network into a number *n* of overlay levels, from a lowest overlay level 0 to a highest overlay level n;
- at the lowest overlay level 0, collecting network status information from network elements of the service provider's network and communication devices connected to the network elements of the service provider's network;

- for each overlay level *i* of the service provider's network, from a lower overlay level i=1 to a higher overlay level i=n-1, collecting network status information from the network elements connected at the overlay level *i* and filtering at said overlay level *i* the network status information collected at each previous (lower) overlay level *j*, j= 0, 1,...i-1, to generate events compatible with call routing and call quality estimation and associated with an identity, and aggregating the generated events based on the associated identity and event value;
- broadcasting in cascade, from a lower overlay level 1 to a higher overlay level n-1, the aggregated events;
- exposing to the consumer at the highest overlay level n, by using publish-subscribe, the broadcasted network status information.

In a possible embodiment of the method, the consumer of the network status information is subscribed to a subset of network status data which are filtered according to filtering criteria defined based on a set of network elements, a set of one or more users or on network routing. For example, the subset of network status information is filtered considering information on: i) the status of available networks interfaces to a first communication device and ii) the status of the network elements involved in a communication between the first communication device and the consumer.

The method in accordance with the above described aspects of the invention has a number of advantages with respect to prior art, which can be summarized as follows:
- The present invention allows the use of API on top of existing networks, enabling 3^{rd} party to gather and exploit information from multiple vantage points along the data path, without endangering the viability and the business model of the network used to carry the said services (for example: a VoIP client cannot extract data from the fixed/mobile provider offering the service, but the fixed/mobile provider can enable its clients to benefit from smart call routing).
- The present invention allows the exploitation of usually discarded low-level signal that can be in fact aggregated and associated to a single flow, bringing new generation of services on top of existing network. This information can be utilized as well to build business intelligence tools.

These and other advantages will be apparent in the light of the detailed description of the invention.

### Description of the drawings

For the purpose of aiding the understanding of the characteristics of the invention, according to a preferred practical embodiment thereof and in order to complement this description, the following figures are attached as an integral part thereof, having an illustrative and nonlimiting character:
Figure 1 shows an overlay network for providing network status information to enable call quality monitoring and call routing for third parties, according to a preferred embodiment of the invention.
Figure 2 shows a schematic diagram of providing information on a flow used by a VoIP application, in accordance with a possible embodiment of the invention.
Figure 3 shows an overlay structure for monitoring a fixed network with information from the home network, in accordance with a possible embodiment of the invention.
Figure 4 shows an overlay structure for monitoring a fixed network with information from the core network, in accordance with a possible embodiment of the invention.
Figure 5 shows an overlay structure for monitoring a mobile network with information from the access and core radio networks, in accordance with a possible embodiment of the invention.
Figure 6 shows an overlay structure for monitoring a mobile network with information from the mobile user equipment, in accordance with a possible embodiment of the invention.
Figure 7 shows a schematic diagram of mapping network elements of an entire ISP network network into information sources, in accordance with a possible embodiment of the invention.

### Preferred embodiment of the invention

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

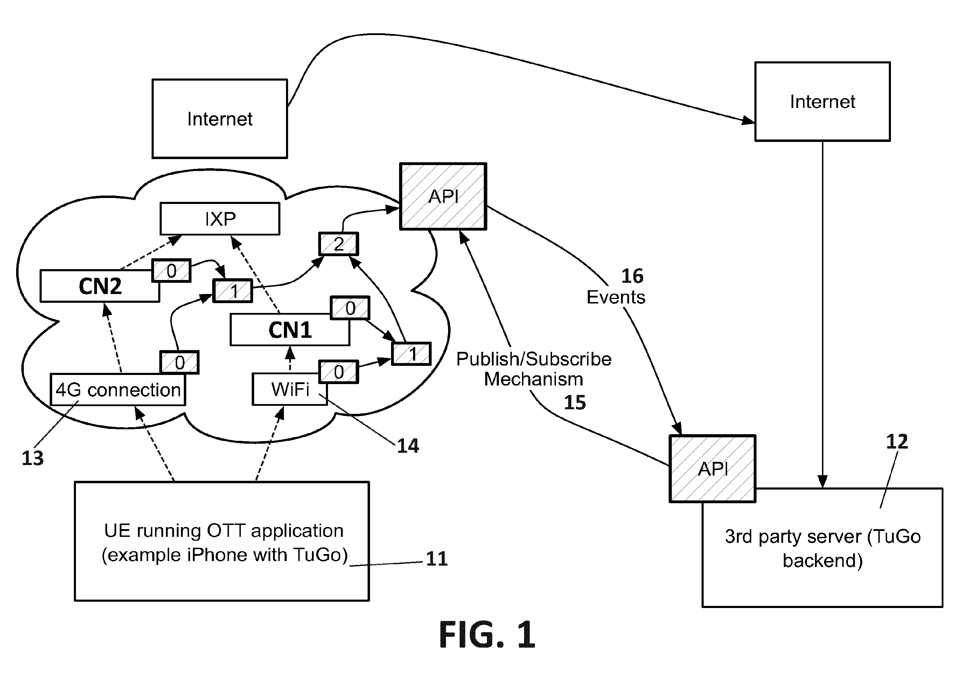

It is within this context, that various embodiments of the invention are now presented with reference to the FIGs. 1-7.

Figure 1 shows a general overview of a basic network infrastructure for providing network status information to enable call quality monitoring and call routing for third party servers (12). In this infrastructure, each vantage point, shown as white boxes in Figure 1, which could be a network element, for instance, is associated with a collection point, shown as boxes with label '0' in Figure 1, which belongs to an overlay number **0.** This overlay **0** collects basic network status data such as:
- current level of the WiFi signal connected (13) in WiFi MAC address,
- current level of the 4G connection (14) state in use for a particular terminal (user equipment-UE-) identifier which is running an OTT application (11),
- relevant information about the packet routing within the infrastructure of each domain; e.g., Internet Exchange Point (IXP) in the fixed domain, residential core network (CN1) and cellular core network (CN2) in mobile domain;
- network statistics such as delays, retransmissions, out of order packets, etc...,
- hardware statistics such as CPU utilization etc...

From overlay **0,** the information is gathered to a next level or overlay number **1**, boxes labeled '1' in Figure 1, which associates the local identity with the identity of an upper level. For example:
- In the WiFi network, the identity of the terminal is carried by a MAC address, made of six hexadecimal characters. This is the identity of the physical interface. The level 0 of the router gives the association between the MAC address and the IP address thanks to the NAT table that performs the routing and masquerading on behalf of the client. This is also information of the overlay **0.** Once the information is gathered by the overlay number **1** from all collection points of the overlay **0,** the information is reconciled.
- Same process can happen on the cellular network. The current terminal UE is reconciled by the overlay of upper level, e.g., overlay number **2** in Figure 1, in order to associate the IP flow with the device identifier.

At the end of the overlay architecture shown in Figure 1, denoted as level n-1, just before a last overlay **n**, the provider has detailed information of each network level from 0 to n-1 regarding a specific device/flow.

The last step necessary is to get the precise flow to track. To enable this, a publish/subscribe mechanism (15) is offered through an API (10) accessible from the Internet space.

As a result, a third party server (12) can subscribe for high-level events (16), such as achievable bandwidth; availability of a nearby WiFi connectivity, etc., and can influence the decision of its application services.

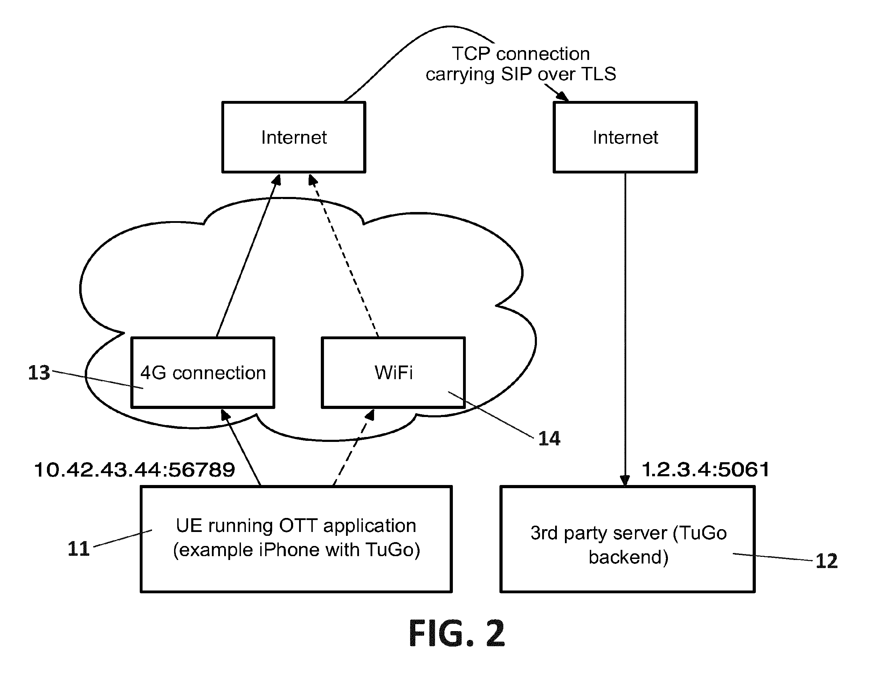

In order to protect the user information, the provider is delivering information based on the actual flow used by the application -app-, as illustrated by the following specific example shown in Figure 2. A VoIP application using the SIP protocol as signaling over TLS is considered. By default, the third party server (12) providing the VoIP service can extract from the TCP connection the addresses of the end-points: the internal address of the application running on the user terminal on the 4G network (10.42.43.44:56789) and the external end point where this connection is terminated (1.2.3.4:5061). As a result, and by giving this information to the ISP through the API portal, the third party server (12) can subscribe to any event affecting the said UE (11). And as a result, with the two tuples, the provider can identify the terminal and monitor the whole flow, extracting automatically the relevant metrics - availability of a nearby WiFi network, degradation of the signal, etc...- and inform the OTT provider through an event-based mechanism.

Summarizing, three subsystems are distinguished as overlays mechanisms existing on top of the current network infrastructure, defined for providing status network data:
i) A first system designed to collect and process low level information from communication devices within the ISP network. The different sources of information considered are listed here after. This is overlay number 0.
ii) A second system designed to filter and aggregate relevant processed low level data in order to limit the quantity of information flowing inside the system. Automatically low-level events are filtered from the above-mentioned sources and generates high level events compatible with call routing and call quality estimation, and associated with a given identity, comprising identify resolution and disambiguation. This second system incorporates mechanisms to protect trade secrets, i.e. avoiding a 3^{rd} party to extract too much information on the ongoing proceeding of a given networks, e.g., numbers of users..., based on rate-limited rules and origin checking algorithms. On the other hand, the aggregation step is based on generating 'identity, event, value' tuples where only the relevant, requested, events are broadcasted to higher levels of the infrastructure. This is a series of overlays, one by identity domain, organized in a tree-based structure, denoted as overlay **1** to **n-1**, which depends on the complexity of the network.
iii) A third system exposes the data through a publish subscribe mechanism for enabling external providers such as VoIP services to receive information from the underlying infrastructure their clients are running on. This third system is designed to iii.1) authenticate the VoIP service by requesting the said VoIP service to provider the minimum information of the customer; iii.2) provide a series of public sub-services for the VoIP service to receive information; and iii.3) protect trade secrets of the infrastructure by anonymising, rate-limiting the data existing the provider premises. This is the last level of the network infrastructure, denoted as overlay **n**.

The proposed method for providing the information on network status relies on different sources of information which are present in the network of mobile and fixed ISPs. The network elements of the following list are considered as potential sources. In the list of information sources described below, for each information source, the list specifies the considered metric and the identifier to be associated as well as the identifier of higher level to associate in order to build the overlay network. More specifically, the lists of the following tables indicate:
- Type: It indicates whether this metric applies to a fixed or mobile network.
- Metric: Each type of information that may be collected and that may have an impact on the quality of the communication
- Identifier: The identifier that can be used to uniquely identify the device, user or flow/call.
- Dependencies: What other identifiers are required to uniquely identify the flow/call.
- Location: The element from where the measurement can be collected.
- Access: The API that allows us to collect the information.
- Usage: What type of information/problems can be identified by this measurement.

### A) Listing of information sources present in fixed infrastructure

### A.1) Home network

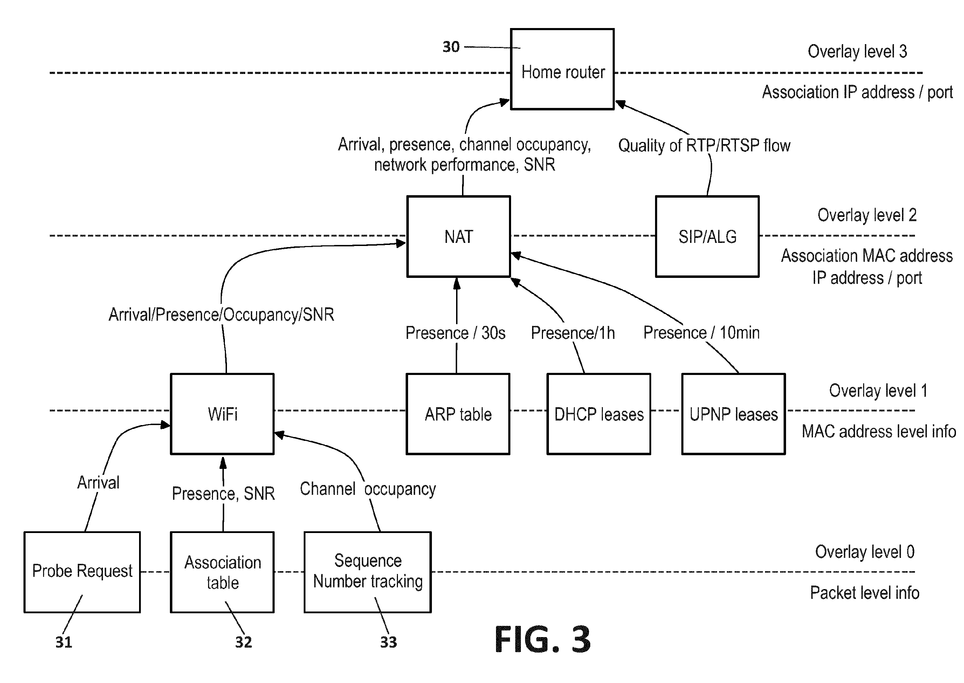

Starting from the home router (30) point of view that typically hosts the public address IP on behalf of the customer, the overlay infrastructure is shown in the example of Figure 3 and described as follows:
- overlay **0** collects the packet-level information from probe request devices (31), association tables (32) and sequence number trackers (33),
- overlay **1** collects MAC-level information, more specifically, the ARP and DHCP tables, of the Address Resolution Protocol and Dynamic Host Configuration Protocol respectively, reveal the presense of a device in the internal network, e.g., WiFi or Ethernet, and they also contain the association between MAC and internal IP addresses, the Universal Plug and Play (UPNP) portmap table provides information about the running services and their open network ports;
- overlay **2** collects and filters information from the association of MAC and IP adresseses, the NAT holds information that can identify the endpoints of every network flow (pairs of internal and external IPs and ports), the SIP/ALG may reveal the availability of a SIP service and provides its internal and external IP information;
- and overlay **3** collects, filters and broadcasts information associated with a public IP address level.

Table 1 lists the different metrics and the potential dependencies, access model and typical usage for a fixed network operated by an ISP.

**Table 1**

| Type | Metric | Identifier | Dependency | Location | Access | Usage | Notes |
|---|---|---|---|---|---|---|---|
| Fixed (1) | ARP table | MAC address | NAT table | Home router | TR-069 interface; custom access. | Device presence, connectivity | ARP tables typically offer a 30 second visibility. |
| Fixed (2) | NAT table | Local IP/port -> public IP/port mapping | Public IP address | Home router | TR-069; SNMP; interface; custom access. | Device presence connectivity, Bw usage. | NAT mapping are valid until timeout; typically 1 hour. |
| Fixed (3) | DHCP leases | MAC address local IP | NAT table | Home router | TR-069; SNMP; custom access. | Device presence, connectivity. | DHCP lease are highly dependent on the router model (1 h to 24h observed) |
| Fixed (4) | UPNP leases | Local IP/port public IP/port mapping | NAT table | Home router | TR-069; SNMP; custom access. | Device presence, connectivity. | UPNP leases are highly dependent on the router model (10 min to 24h observed) |
| Fixed (5) | WiFi association table | MAC address | NAT table | Home router/ Access point | TR-069; SNMP; custom access. | Device presence, connectivity | WiFi association timeout depend of the WiFi stack, generally minutes. |
| Fixed (6) | WiFi last packet SNR (or moving average of last packets SNR) | MAC address / SNR | NAT table | Home router/ access point | TR-069; SNMP; custom access. | Device local connectivity, imminent location change | WiFi SNR packet are typically stored at the driver level. |
| Fixed (7) | WiFi Probe packet | MAC address | NAT table | Home router/access point | TR-069; SNMP; custom access. | Device arrival, bad connectivity from device point of view. Channel occupancy. | This packet is a precursor of local connectivity. Can be used to detect the device just arrived home. |
| Fixed (8) | SIP ALG kernel stats | Local IP address | Public IP address | Home router | TR-069; SNMP; custom access. | RTP/RTSP flow statistics. SIP message tracking. | Many home gateways tracks SIP protocol in their kernel to ensure proper behavior. Stats can be used for quality assessment. |
| Fixed (9) | WiFi sequence number. | MAC address | Public IP address | Home router/access point | TR-069; SNMP; custom access. | Local channel occupancy. | |

Using this particular overlay fixed network, a larger level of low level events are broadcasted and associated with the public IP address used by the device hosted behind this home user premise. In the case of a VoIP client, this superposition of overlays is capable of detecting the arrival of the device within the home network (probe request), its departure (fading on the SNR), the local channel occupancy (WiFi quality), as well as the activity of the device (presence) based on the detected activity on the ARP, DHCP and UPNP levels. The activity can be used to drive the call routing policy once those events are broadcasted back to the VoIP provider. As well, the tracking of flows of RTP/RTSP used to carry the voice might be used as an indicator for the VoIP to take decision on the call quality/call routing path.

### A.2) Fixed network infrastructure

In a similar manner, the same overlay infrastructure can be applied to the rest of the fixed network, placed in the infrastructure side of the fixed operator.

The different metrics, their potential dependencies and associated locations are listed in Table 2.

**Table 2**

| Type | Metric | Identifier | Dependency | Location | Access | Usage | Notes |
|---|---|---|---|---|---|---|---|
| Fixed (10) | ATM cells errors / CRC count | Phone line / VC | DSLAM | DSL Modem | SNMP, custom access. | Connection quality - errors might need correction and affect latency. | Updated on a per cell basis. Big data kind of analysis might be required. |
| Fixed (11) | Synchro rate | Phone line | DSLAM | DSL Modem | SNMP; custom access. | Bandwidth/lat ency information | Updated once per sync. |
| Fixed (12) | optical interface SNR | Optical port identifier | OLT | ONT | SNMP; custom access. | Connectivity | Updated in realtime, could be used to detect connectivity anomaly immediately. |
| Fixed (13) | Occupancy ratio | Line card/optical port | Core router | OLT/DSL AM | SNMP; custom access. | Congestion detection. | The occupancy can be used to quality a high traffic central that can bring frequent saturation. |
| Fixed (14) | CPU capacity, memory, network capacity | IP address | Core router/ Border router | Core network | SNMP; custom access. | Congestion, capacity available on the link | Information on capacity can enable call quality adaptation and call routing. Can be duplicated to all routers present in the infrastructure. |
| Fixed (15) | BGP prefix announcement | AS number | Point of Presence (POP) | Border router | SNMP; custom access. | Connectivity | The disappearance of some routes might be used to adapt the call routing in order to compensate. |

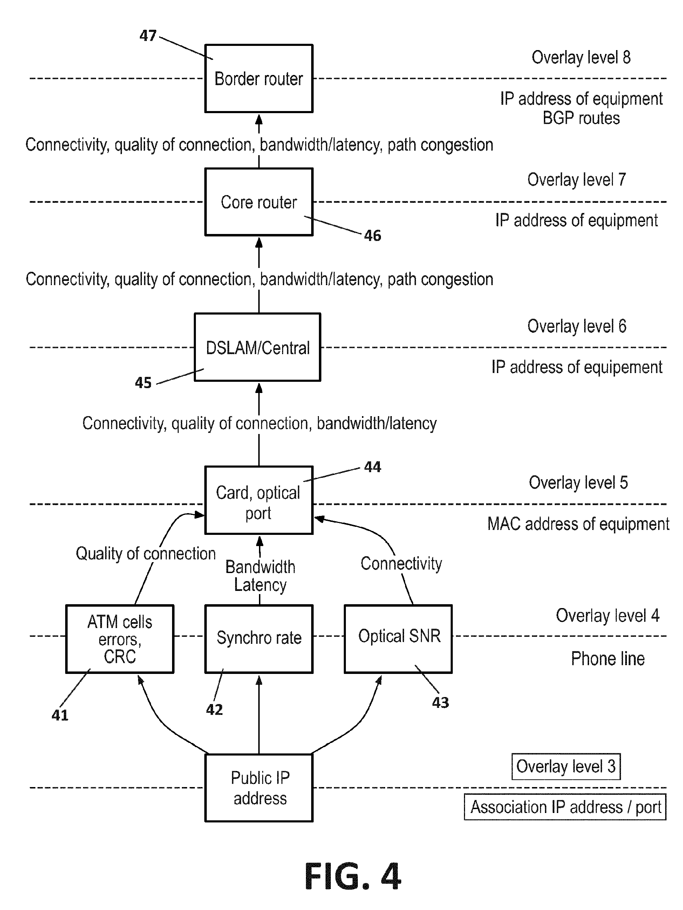

Figure 4 shows the source of events located at overlay levels, from overlay **4** to overlay **8,** as a continuation of the overlay structure of the home network shown in Figure 3, in the core network of the ISP operating a fixed network. These overlays collect information respectively on connectivity, quality of connection, path congestion, bandwidth and latency, as described as follows:
- overlay **4,** on top of public IP address level at overlay **3**, collects data on optical signal-to-noise ratio (43) to obtain information on connectivity, data on ATM cells and error detection (41) to obtain connection quality parameters, and measures synchro rate (42) to get bandwidth/latency values.
- overlay **5** collects and filters information from the card and optical ports (44) on MAC adresseses of the equipments,
- overlay **6** collects and filters information on IP adresseses of the equipments from the Digital Subscriber Line Access Multiplexer (45) in a remote terminal box or at the Central Telephone Office,
- overlay **7** collects and filters information also on path congestion from the core router (46),
- and overlay **8** collects, filters and broadcasts information from the border router (47).

### B) Listing of information sources present in mobile network infrastructure

For the mobile network, it is possible to extract simultaneously resources and connectivity information (local radio capacity; core network capacity), but also quality metrics (voice, and also in terms of network resources) used by the device itself, as well as location information than can be used to anticipate mobility (location tracking via ceIIID). With all this information sorces, it is possible to offer network status information at the edge of the network, giving third parties information on imminent connection change, voice failover etc...

### B.1) Access radio network

The mobile network of an ISPs can be used to exploit natural signal present in the protocols, signals which are extracted at the antenna level - between the terminal and the radio link-, as defined in the following Table 3.

**Table 3**

| Type | Metric | Identifier | Dependency | Location | Access | Usage | Notes |
|---|---|---|---|---|---|---|---|
| Mobile (16) | Packet/Frame delivery rate | UE ID | SSGN | BTS/BSC | Custom access. | Quality of connection, local congestion in the cell, bad radio conditions. | While GPRS is a bit small for VoIP usage; EDGE can be used with low rate codec according connection is good enough. |
| Mobile (17) | Radio layer statistics (GMSK) | UE ID | SSGN | BTS/BSC | Custom access. | Quality of radio link | Early sign of radio signal degradation (modulation) can be used as an early signal. |
| Mobile (18) | UE state (idle, shared, dedicated) | UE ID | RNC | NodeB | Custom access. | Connectivity status; bandwidth, latency, | Updated at each active transmission depending on the network settings. Can be used to infer use of the channel by other apps on the terminal. |
| Mobile (19) | Power level statistics | Cell ID | RNC | NodeB | Custom access. | Congestion of the radio link | The variation of power within a cell can indicate a larger number of users which might lead to reduced bandwidth. |
| Mobile (20) | Backhaul bandwidth occupancy + nature | Cell ID, RNC ID | RNC | Radio link/Fiber link/ Cable Link | Custom access. | Congestion of the backhaul, more problematic for dedicated microwave link. | Some microwave link might get saturated if used in a single chain for a distant antenna. Could lead to bandwidth shortage. |
| Mobile (21) | OFDM/modulati on rate statistics | UE ID | eNodeB | SSGN | Custom access. | Bandwidth, latency, connectivity or change of connectivity | Variation of the bitrate can be a precursor. |

### B.2) Core radio network

The active elements of upper level can also be used to extract information, as indicated in the following Table 4.

**Table 4**

| Type | Metric | Identifier | Dependency | Location | Access | Usage | Notes |
|---|---|---|---|---|---|---|---|
| Mobile (22) | Cell ID / last known cell ID | UE ID | SSGN | RNC/eN odeB | Custom access. | Change of location if cell ID are not geographically collocated. | Could be used to detect geographical change and use this information for call routing/codec adaptation. |
| Mobile (23) | PDP context | Assigned IP address | SSGN | GGSN | Custom access. | Connectivity, data usage, reconnection rate | Early problem such as packet timeout and connection problem can be detected there. |
| Mobile (24) | Voice call quality (codec, rate, failure) | IMSI, phone number | MME, CS-MGW | MSC | Custom access. | Connectivity, connection quality, audio performance of native calls | The statistics on the voice calls can be used to switch to native network in terms of strong degradation of the data signal (3G->GPRS network for example) |
| Mobile (25) | LAC statistics | LAC ID, cell ID RNC ID | SGSN | GGSN | Custom access. | Overall statistics on the local geographic zone, region. | A regional incident might influence the choice of call routing. |
| Mobile (26) | GTP tunnel statistics | IP addresses | GGSN | PDN | Custom access. | Congestion of the core network (saturation of one instance) | Some temporary performance problems can be detected by looking to GTP statistics from all PDP sessions running. |
| Mobile (27) | Packet per seconds | IP address | PDN | CGNAT | Custom access. | Observed practical bandwidth; saturation of the core network. | Packet-based statistics can be use to monitor the performance of the UE and detect anomalie or concurrent traffic. |
| Mobile (28) | Billing records | Phone number | PCRF | PDN | Custom access. | Connection volume, roaming information, reconnection rate. | CDR for calls and data session can be used to pin point temporary or long term issue. |
| Mobile (29) | Authentication error | Phone number | AAA | PDN | Custom access. | Connectivity | Failure to authenticate the SIM can be used to divert calls. |
| Mobile (30) | NAT statistics | IP public | CGNAT | IXP | Custom access. | Connectivity, concurrent usage by others apps, tracking of keepalive. | Tracking the CGNAT can reveal information on the behavior of the end user client - i.e. disconnection, problem with others concurrent apps. |

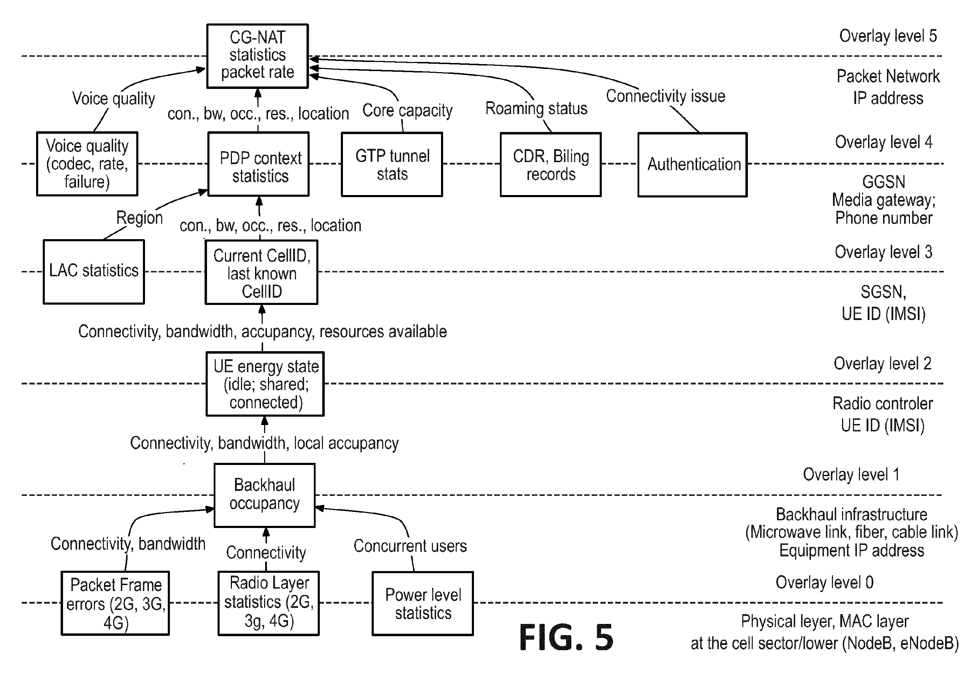

Similarly to the case of fixed network, Figure 5 shows a dependency graph and the information which can be extracted from the network, as follows:
Overlay **0:** Low-level -Physical and MAC layer- metrics are collected from last-mile devices such as nodeB or eNodeB. This includes per frame errors, SNR and radio layer statistics.
Overlay **1:** Similar metrics coming from the backbone network connecting these devices to the radio controller.
Overlay **2:** Information from the radio controller related to the state of the device and its connectivity, i.e., the presence of a dedicated data channel. The device is recognized here by the IMSI.
Overlay **3:** SGSN layer information between multiple radio controllers. Furthermore, information related to handovers between different cellular sectors.
Overlay **4:** The GGSN offers high-level overview of the whole network such as the billing and authentication information of the user (including the phone number). Furthermore, it provides statistics about the quality of the Core network (i.e., information about the GTP tunnels and the PDP status of all the connected devices).
Overlay **5:** CG-NAT provides information related to the packet network at the IP-layer.

### B.3) User Equipment based measurement

The user equipment (UE) is a special case of the infrastructure of the mobile telecommunication network, as the end user typically owns/control it. Nevertheless, it is possible to provide a software support to gather, collect and transmit data, indicated in the following Table 5, regarding important statistics for Voice metrics quality and voice routing.

**Table 5**

| Type | Metric | Identifier | Dependency | Location | Access | Usage | Notes |
|---|---|---|---|---|---|---|---|
| Device (31) | Active network interfaces | Interface name | IP address | Network stack | System API call. | Report if the device is simultaneousl y connected to different interface (cellular, Wifi, Bluetooth) | Called by used for smart call rerouting between interfaces or by using native calls. |
| Device (32) | RSSI level (wifi) | Mac Address | Active network interface | Network stack | System API call. | Connectivity, bandwidth, mobility detection, location | Drastic change of RSSI could indicate an immediate change of radio condition. |
| Device (33) | RSSI level (GSM modem) + type of carrier (GSM, UMTS, HSDPA, 4G) + connection state | IMEI | Active network interface | Network stack | System API call. | Connectivity, bandwidth, bandwidth capability mobility detection, location | Same as before, with the capability to failover on a more robust technology in case of low signal. |
| Device (34) | Bluetooth detection | IMEI | Active network interface | Network stack | System API call | Scan of surrounding Bluetooth transmitter and Bluetooth low energy device (iBeacons in iOS) | Scan of the local environment can reveal is the terminal is at a certain location and if it is surrounded by Internet Of Things wearables (close to the user, like activity tracker). |
| Device (35) | Current application in use (or screen off) | IMEI | IP public address | Software stack | System API call | Current usage (or not) of the device. | Can influence call routing (if native call feature is in use, use VoIP capability) in order to reach the person. |
| Device (36) | Favorites | IMEI | IP public address | Software stack | System API call | Most frequent caller/callees | Codec choice and adaptation based on the importance of the contact. Failover over native call capability could be triggered if VIP contact. |

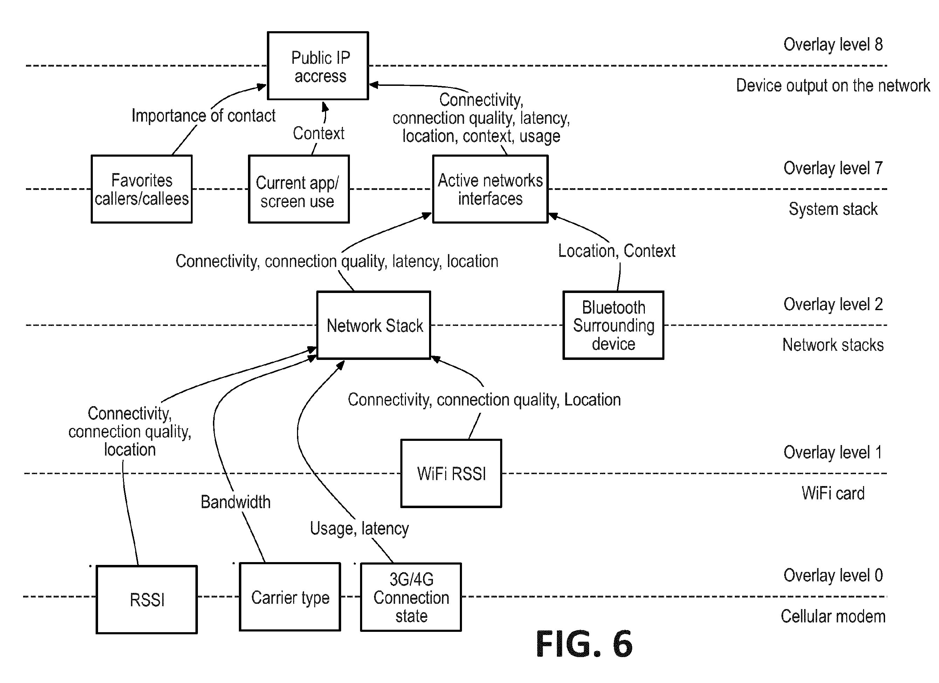

Figure 6 shows the dependency graph of overlays and extracted information at each overlay for the end user device, as follows:
- Overlay **0:**: provides physical layer metrics about the GSM conditions such as connectivity (RSSI), bandwidth, bandwidth capability mobility detection, location (cell ID).
- Overlay **1:**: provides similar information about the WiFi card (RSSI, type of modulation, etc).
- Overlay **2:**: the information from the previous layer is given to the network stack to infer an estimation of connectivity, connection quality, and location, the Bluetooth stack can also be used to understand context (i.e., if the user is using hands-free in a vehicle or if there are any available loT devices)
- Overlay **7:**: In addition to the active network interfaces and their QoE, information from the user terminal such as the applications that are running or the importance of the contact can be derived by the OS.
- Overlay **8:**: Information from all layers is then binded to the public IP address of the client.

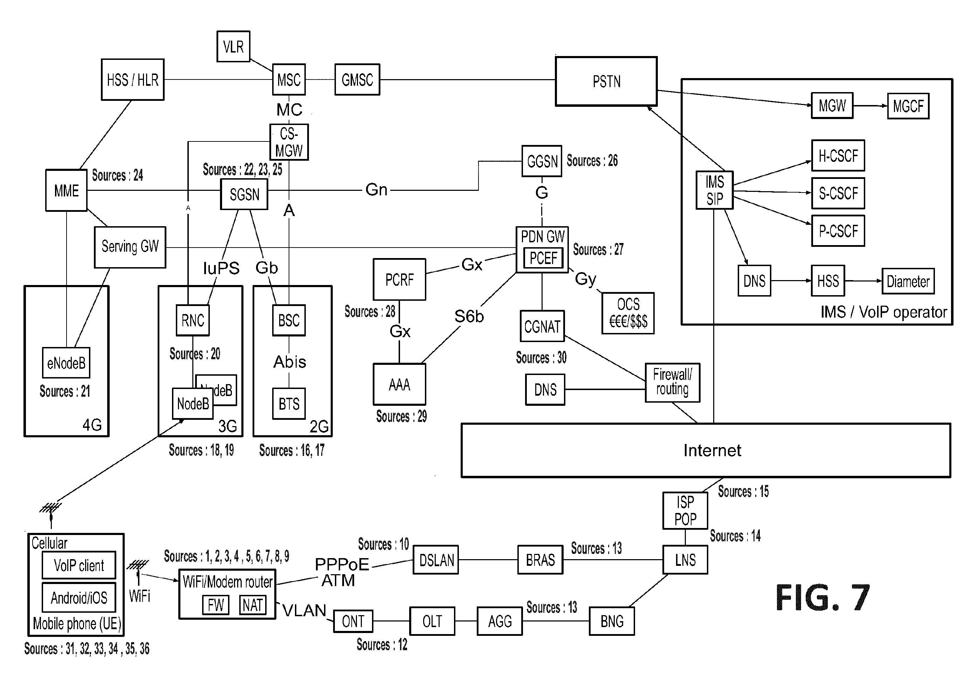

Figure 7 shows thirty sixpossible sources of information previously identified, from source 1 to 36, and placed on top of a more global view of the fixed and mobile architecture of an ISP.

The proposed embodiments can be implemented as a collection of software elements, hardware elements, firmware elements, or any suitable combination of them.

The proposed embodiments can be implemented for different possible applications, some examples being:
- Business Intelligence: the present invention allows service providers to identify key bottlenecks and problems in their network and also help to the plan possible upgrades and expansions.
- Improve user quality of experience: Apart from the non-immediate consequences of allowing the ISP to troubleshoot connections, the users can benefit from immediate improvement of their quality of experience as the network can react to poor conditions.
- SLA verification: The measurements can be used ensure that certain Service Level Agreements (SLA) are enforced. They can also be used to support cases where a service provider has to prove that an SLA is not violated within its own network.
- Detect attacks: The measurements can also be used to detect and avoid attacks within the internal network.
- Applications on top: A set of applications can use this traces for non network-related purposes. For instance, applications such as mobility models of subscribers (i.e., SmartSteps), statistics of human behavior (e.g., how many people in a certain area use iPhones) can be collected. Another example is using CDRs together with quality of experience can predict churn or service popularity.
- APIs: An API can be offered on top of the extracted data to third parties (e.g., application developers) to allow them to tune their service based on the current and the predicted conditions of the network. Third party developers can also build applications on top the collected data.
- Enhancing collaborations between Internet Service Providers (ISPs) and other third party service providers: Since in the prior art systems only a part of the data can be shared between ISPs, Content Delivery Networks (CDNs) and other Service providers, all of them having mutual interest to provide a good service but no one having a full picture of the conditions throughout the data path, this invention allows improving collaborations based on extracted data from the entire overlay network.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for providing network status information of a service provider's network to a consumer, the method **characterized by** comprising:
- splitting the service provider's network into a number *n* of overlay levels, from a lowest overlay level 0 to a highest overlay level n;
- at the lowest overlay level 0, collecting network status information from network elements of the service provider's network and communication devices connected to the network elements of the service provider's network;
- for each overlay level *i* of the service provider's network, from a lower overlay level i=1 to a higher overlay level i=n-1, collecting network status information from the network elements connected at the overlay level *i* and filtering at each overlay level *i* the network status information collected at previous overlay levels *j*, j= 0, 1,...i-1, to generate events compatible with call routing and call quality estimation and associated with an identity, and aggregating the generated events based on the associated identity and a value of each event;
- broadcasting in cascade, from the lower overlay level 1 to the higher overlay level n-1, the aggregated events;
- exposing to the consumer at the highest overlay level n, by using publish-subscribe, the broadcasted network status information.

2. The method according to claim 1, wherein the consumer is subscribed to a subset of network status information which is filtered according to filtering criteria which are defined based on a set of network elements, a set of one or more consumers or on network routing.

3. The method according to any of the previous claims, wherein the consumer is a server providing a communication service.

4. The method according to claim 3, wherein the consumer is is a server providing VoIP service.

5. The method according to any of claims 3-4, wherein the consumer uses the exposed network status information to route communications targeted to a first communication device.

6. The method according to any of claims 3-4, wherein the consumer uses the exposed network status information to indicate to a first communication device a specific network interface from a plurality of available network interfaces to be used by the first communication device.

7. The method according to any of claims 2-6, wherein the subset of network status information comprises information on the status of available networks interfaces to a first communication device and on the status of the network elements involved in a communication between the first communication device and the consumer.

8. The method according to claim 7 wherein the consumer gets authorized to receive the exposed network status information by means of indicating an identifier of the first communication device unknown by third parties, which are different from the first communication device and the service provider.

9. The method according to claim 8 wherein the identifier is a private IP address of the first communication device within the service provider's network.
